# EUROPEAN PATENT APPLICATION

(11) **EP 4 060 693 A1**
(43) Date of publication of application: **21.09.2022**
(21) Application number: 21382213.3
(22) Date of filing: 17.03.2021
(51) Int. Cl.: H01F 5/02, H01F 27/32, H01F 27/10, H02K 9/19

(54) **LIQUID COOLED BOBBIN FOR A WIRE WOUND MAGNETIC DEVICE**

(71) Applicant: Premo, S.A., 29590 Campanillas Málaga (ES)
(72) Inventor: CAÑETE CABEZA, Claudio, 29631 Benalmádena (ES); ROJAS CUEVAS, Antonio, 29190 Málaga (ES); NAVARRO PÉREZ, Francisco Ezequiel, 08006 Barcelona (ES); ARIZA BAQUERO, Miguel Ángel, 29002 Málaga (ES)
(74) Representative: Juncosa Miró, Jaime

(57) **Abstract**

A liquid cooled bobbin for a wire wound magnetic device comprises an electro-insulating bobbin (20) with a first outer surface (21) of a closed contour, therearound, for supporting at least one first conductor wire winding (DX) wound around a first axis (X) defined by the electro-insulating bobbin (20), and a chamber (30) within the electro-insulating bobbin (20), the chamber being integrable to a sealed cooling circuit through connection ports (31) allowing a path of a cooling fluid through the chamber (30). The chamber (30) is comprised between two parallel walls (32, 33) of the electro-insulating bobbin (20), one of said walls (32, 33) providing the first outer surface (21), and the chamber (30) extends at least around most of said closed contour of the first outer surface (21). A liquid cooled wire wound magnetic device is also provided as well as a set of magnetic devices interconnected to a cooling circuit.

## Description

### Technical Field

The present invention refers to a bobbin (coil former) for a wire wound magnetic device which has the particular feature of being refrigerated by a liquid in particular a coolant liquid that is not electro conductive. The invention further refers to a liquid cooled wire wound magnetic device, e.g., an inductor, transformer or filtering choke constructed using the above liquid-cooled bobbin. This bobbin appears to be particularly useful for magnetic components used in on board power converters for electric and hybrid vehicles that make use of customized magnetic power components in order to increase power density. Power density is a key factor in these converters, since every gram of weight saved can be used as an additional gram of battery, and thus of vehicle range. The same is true for the volume occupied, the less volume, the more space available for the battery.

The increase in power density means that in the same volume reserved for a magnetic component, higher densities of electric current can be introduced. This electric current is converted into magnetic flux inside the component, and then returns to electric energy at the end of conversion or storage (depending on whether it is a transformer or a filter choke).

During the conversion of electrical energy to magnetic energy, losses are transmitted in the form of heat. Since the aim is to increase the power per unit volume (W/m³) and in a magnetic component the energy is mostly transferred to the load (typical (Pout-Pin)/Pin efficiencies exceed 95%), the result is that the Ploss, power losses are concentrated in smaller volumes, thus raising the temperature of the device. As the power density increases, these losses become larger and larger in the same size. It is particularly important to effectively evacuate this waste heat from the losses as quickly as possible from the magnetic component. An inefficient design in heat loss generation or heat dissipation can cause the component to reach extreme temperatures or even never be able to stabilize inside the converter at a stable temperature (the heat flux would not be properly dissipated in steady state). It is the temperature that produces adverse effects and the breakdown of the component, either by deterioration of the insulation causing short circuits or by reaching the temperature at which the core ceases to be ferromagnetic or Curie temperature, also causing overcurrent and short circuits. Therefore, the main limiting factor for maximizing the power per unit volume at constant efficiency is the temperature until the next limiting factor is reached, which is the core saturation induction (Bsat).

Losses in the magnetic components, which cause them to heat up, occur:
- In the core by hysteresis (energy consumed in the changes of orientation of the magnetic domains) or by induced currents or Eddy currents (due to the electrical conductivity of the cores).
- In the Conductor (usually copper), by Joule/Ohmic effect due to the conductor resistance, by skin effect, due to the reduction of the cross-section through which the electrons travel at high frequencies by proximity effects due to the reciprocal currents that the field generated by the currents in the conductors induces in the adjacent conductors or by Eddy currents or currents induced by the leakage magnetic field or field generated by the primary current which is not confined in the core. The most important losses are known as Fringing losses, produced by the currents that the stray or dispersed flux in the air gap induces in the area closest to the winding.

Although the losses in a constant section core without gap are equally distributed throughout its volume and its mass is generally high, as well as its thermal conductivity (from 4W/m.K in a ferrite to 100W/m.K in metallic cores), there are areas of the transformers and coils (chokes) that concentrate high losses and heating, especially in those formats that use a core made up of two or more parts.

The area of a high-frequency magnet component with high power density where most losses are generated is the gap or air gap area. The gap zone is a zone where Eddy currents generate the so-called "fringing flux". This fringing flux is a magnetic flux that is no longer contained within the magnetic core. As it escapes, it can affect any nearby material.

Due to the high-power density required of the magnetic components in on-board power converters, the winding wire, the winding spool and even the terminals can be remarkably close to the gap. The high-frequency magnetic flux, interacting with the winding wire turns, generates new eddy currents that cause losses, and therefore unwanted heating. In fact, the gap becomes a "heat generator" that needs to be removed as quickly as possible from the magnet component.

Secondly, it is the copper wires themselves wound on the bobbin that generate the most losses. The "proximity effect" of alternating electrical currents creates unwanted stray or disperse fields. This is the second heat generator of a high-power magnet component. Thirdly, the material of the magnetic core itself is not perfect. There are imperfections in the construction of the magnetic domains of the magnetic material. These imperfections cause losses and cause the core itself to heat up.

### Background of the Invention

In order to solve the above heating troubles in a bobbin for a wire wound magnetic device, and therefore increase the P/V, the Ploss/V equivalence has been tried to be minimized in order to make Pout maximum with V minimum. To improve the performance or Ploss/Pin efficiency several measures have been implemented:
- Cores with extremely low frequency losses such as ferrites with very low remanence and coercivity, with a high Bsat and having a high electrical resistivity.
- Windings of maximum useful cross-section at high frequency (Litz wires, tubes, or foils) of very low resistance conductors such as pure electrolytic copper.
- Minimise the gap or distribute it.
- Move the windings away from the fringing flux area of the gap.

Various solutions based on cooling methods, use of resins, potting materials, thermally conductive plastics, aluminium, and cooling plates are described in various prior art documents.

PCT/EP2020/073290 discloses a thermal conductive compound for sealing a power transformer assembly, the thermal conductive compound comprising a silicone resin; and a natural mineral filler including finely divided quartz, quartzite, marble, sand and/or calcium carbonate.

EP21382200 discloses another thermal conductive composition as well as a thermal conductive potting for sealing a magnetic power assembly comprising a mixture containing a first filler, a second filler and a silicone resin, the first filler including sepiolite and a natural mineral filler.

Many thermal conductive thermoplastic materials are known in the field, as the one disclosed in TW202014285 (A) and CN110938246 (A) US2017105315 (A1).

As an alternative, instead of installing the insulated magnetic component isolated, it can be encased in an aluminium box with high heat conduction capacity. Then, the aluminium walls and bottom of the enclosure will help to evacuate the heat better. In addition, vertical walls can be added to help in case the magnetic component is tall.

US2004189429A1, discloses high-power liquid-cooled inductive devices, such a transformer, with multi-layer windings wound around a magnetic core and with a flow diverter that directs coolant flow, such as oil, from the inlet port through the central section of each multi-layer winding.

EP3319174A1 in the field of power electronics refers to a magnetic power unit with a magnetic core including a through hole associated to a device (heat pipe) for heat dissipation.

DE102013206868A1 discloses a method for cooling power semiconductor switch e.g., rectifier, involving thermally connecting a semiconductor device to phase-change material.

US3878492A refers to a liquid-cooled transformer winding with at least one of the conductor parts being hollow and comprising a tube for a liquid cooling medium.

CN209232549U discloses a liquid cooling type high-frequency switching power supply transformer with a cooling duct to take away the heat in the winding of a high-voltage coil. The cooling pipe matches the number of turns of the high voltage coil winding.

EP0680055A1 refers to a high frequency transformer for use in electric vehicle applications, the transformer including a primary winding comprising a hollow metallic coolant turn for transmitting cooling fluid therethrough; and a secondary winding comprising a plurality of conductive turns that are coupled to the primary winding.

JPS6182403A discloses a bobbin for superconductive magnet for improving the cooling efficiency of a superconducting wire wherein In order to effectively cool a superconducting wire wound around a winding shaft, the winding shaft is formed with a plurality of axially extending refrigerant passage grooves extending in the circumferential direction on the outer circumferential surface.

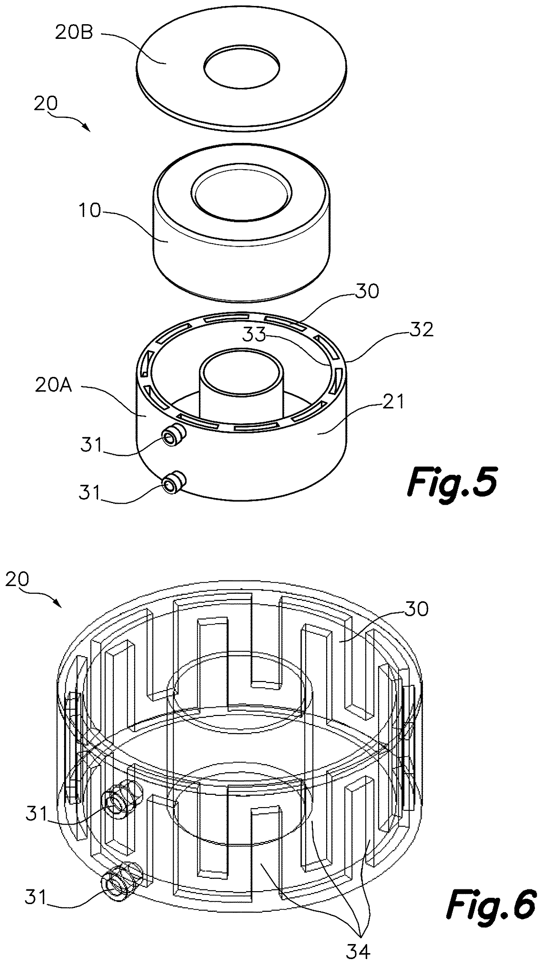

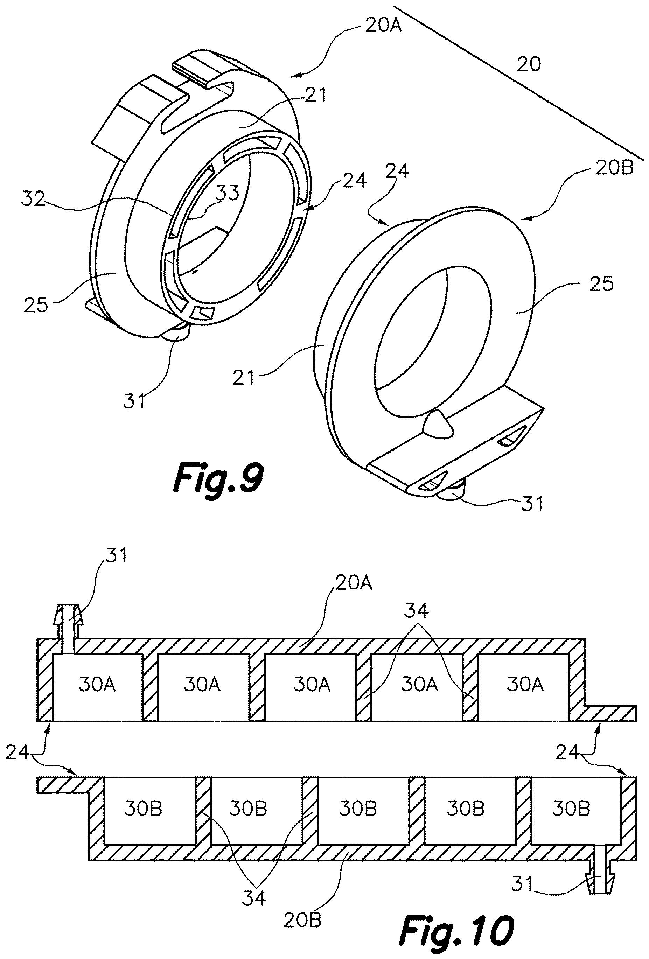

CN109313978A refers to a common-mode inductance coil in which a bobbin has an annular shape that fits he shape of the core, has a through hole portion that penetrates vertically in the centre, and has an opening at one or more locations on the circumferential surface. The inner surface of the bobbin is formed to be larger than the cross section of the core, and in a state where the core is housed in the bobbin a flow of air is capable of circulating between the core and the bobbin (see Figs. 6 and 10) cooling the body of the latter. It is is preferable that the openings on the circumferential surface have the maximum opening width corresponding to the number of turns of the coils wound around the bobbin or the wire diameter. In addition, the lateral openings are preferably formed at opposite positions on the diameter of the bobbin so that the inflow of air to the air flow path A and the outflow of air from the air flow path A' can be smoothly performed.

US2005030134A1 refers to a cooled electromagnetic solenoid coil a simulated pole piece forming an inner core, said simulated pole piece further comprising coolant feed ports and a perforated bobbin surrounding said simulated pole piece and duplex wound solenoid coil wires, wherein coolant is supplied to said simulated pole piece, said coolant traveling through said coolant feed ports, through said perforated bobbin, and through and around said duplex wound solenoid coil wires.

Liquid cooling by moving the coolant flow through an aluminium casing of a power converter is the most efficient way to dissipate heat in a car. The complete cooling circuit already exists in a hybrid or electric car (the battery has to be well cooled), so it is easy to incorporate a coolant inlet and outlet port in the power converter and to move it through the entire outer case of the converter. This is the main heat dissipation measure in the complete power converter. All its elements are installed on aluminium surfaces which have the coolant flowing inside them with a flow rate (around 6L /min).

As for the magnetic components, these are usually installed in a flat aluminium area or base inside the power converter housing, with sufficient coolant flow inside this base to dissipate the heat from the magnet.

### Description of the Invention

The present invention proposes to take advantage of the optimised cooling circuit of the car moving it to the point of maximum loss generation of the magnetic component: the gap. This allows heat dissipation to be direct from the source of the heat losses. It is the most optimal form of design, allowing the heat to be evacuated at source and as quickly as possible by moving coolant directly connected to the car's cooling circuit.

The objective can be reached by means of a sealed circuit extending through the body of the bobbin itself, which contains a not electro conductive coolant which does not contain free ions or metal particles or metal oxides in which currents could be induced by the magnetic field generated in the gap. For this purpose, silicone oils, mineral oils, glycols, or distilled water solutions with concentrations of at least 50% of organic coolants such as ethylene glycol can be used.

This approach prevents the gap heat from spreading through the winding (pure electrolytic copper with a high conductivity of 400W/m.k) to the whole part, leaving only the heat generated by losses in the core and part of the winding as the main part of the heat to be evacuated by conduction to the aluminium casing and/or cool plate. This has three advantages:
- The heat generation zone is cooled directly
- The remaining heat to be transferred to the cool plate by conduction is greatly reduced.
- A new path of low thermal resistivity is generated by introducing a cool surface internal to the bobbin itself.

In this way, if most of the losses according to the previous disclosed solutions had to go from the gap to the cool plate over a distance d, now, this distance *d* will be much smaller and the losses to be evacuated to the cool plate will also be much smaller, producing a double synergic effect: the temperature of the magnetic component will be lower because the thermal resistance of the shorter new path will be lower, as well as the remaining evacuated heat.

Such a design minimises to a minimum the possibility of generating "heat islands" during operation of the magnetic component. With this design, the maximum heat will always be moving outwards from the magnet, and there will be no possibility of encountering positive heat feedback loops that cause certain areas of the magnet component to heat up beyond the up Liquid cooled bobbin for a wire wound magnetic device, comprising:
The invention provides a liquid cooled bobbin for a wire wound magnetic device, comprising:
- an electro-insulating bobbin with a first outer closed surface therearound designed for supporting one first conductor wire winding (DX) wound around a first axis (X) defined by the electro-insulating bobbin; and
- a chamber within the electro-insulating bobbin, the chamber being integrable to a sealed cooling circuit through connection ports allowing a path of a cooling fluid through the chamber,

According to an embodiment of this invention a first portion of the chamber is comprised between two parallel walls of the electro-insulating bobbin (which may be concentric), one of said walls providing the cited first outer surface, and the chamber extending at least around most of said closed contour of the first outer surface.

As per a first embodiment the electro-insulating bobbin is made of a monolithic single piece with the chamber embedded therein.

As per a second embodiment the electro-insulating bobbin is made of several partial pieces bonded together through bonding surfaces, the chamber being defined by an open chamber completely contained within one of the partial pieces and by at least one closure of the open chamber provided by another of the several partial pieces.

Still in another embodiment the electro-insulating bobbin is made of several partial pieces bonded together through bonding surfaces, the chamber being defined by several open chambers, each completely contained within one of the partial pieces, said several open chambers being connected together through connections surrounded by edges of the bonding surfaces .

In an embodiment the chamber includes several partition walls, connecting the two parallel walls, defining a serpentine-shaped chamber.

In one or more of the disclosed embodiments the whole electro-insulating bobbin or one part thereof is made by many thin parallel overlapped layers of additive material produced by a 3D printing process.

In an alternative embodiment when the bobbin is made of several partial pieces and option for the manufacture of the bobbin is the thermoplastic injection moulding of the two halves or more parts of the bobbin. Once injected, both parts can be fitted together and welded by ultrasonic welding for plastics. This welding guarantees the tightness of the internal cooling circuit. Manufacturing by means of moulds reduces the cost and allows for greater scalability in large manufacturing volumes than 3D printing.

Stereolithography or similar 3D printers (SLS, SLA) are perfectly capable of building this type of bobbin design with liquid-sealed internal cavities which are accessed via an inlet and an outlet ports (or ducts) of a sealed tight cooling circuit.

However, in the embodiment examples where only one part of the bobbin is produced by 3D printing another part of the bobbin can be obtained by injection moulding, joining the two halves or more parts of the bobbin, in particular a closing cover or lid as will be shown in the examples below

This results in a completely coolant-tight bobbin, particularly meeting the automotive requirements for vibration and temperature. It is very important that there are no coolant leaks during the whole life of the component once installed. A leak would be a catastrophic failure, as the liquid would escape into the inner area of the magnetic component.

For the inlet and outlet connections of the integrated chamber, an interaction with the power converter is necessary. The installation of specific flexible hoses with O-rings at the connections is a possible option for the liquid inlet and outlet. Another possible option is the direct connection to the aluminium casing by means of holes with O-rings (male-female connections in tolerance). This option is more robust, as it eliminates the use of flexible hoses.

The invention also proposes a liquid cooled wire wound magnetic device including a magnetic core that includes a central portion, surrounded by an electro-insulating bobbin according to the above related specifications and at least one peripheric portion connecting opposed ends of the central portion encircling the electro-insulating bobbin, defining a closed magnetic loop around at least one first conductor wire winding (DX).

The invention further provides for a set of liquid cooled wire wound magnetic devices arranged inside a casing and that are interconnected by means of a sealed cooling circuit connecting the connection ports of each of the chambers of the corresponding devices so that a sealed cooling circuit of the set of devices is obtained.

Other features of the invention will appear in the following detailed description of some embodiments.

### Brief description of the drawings

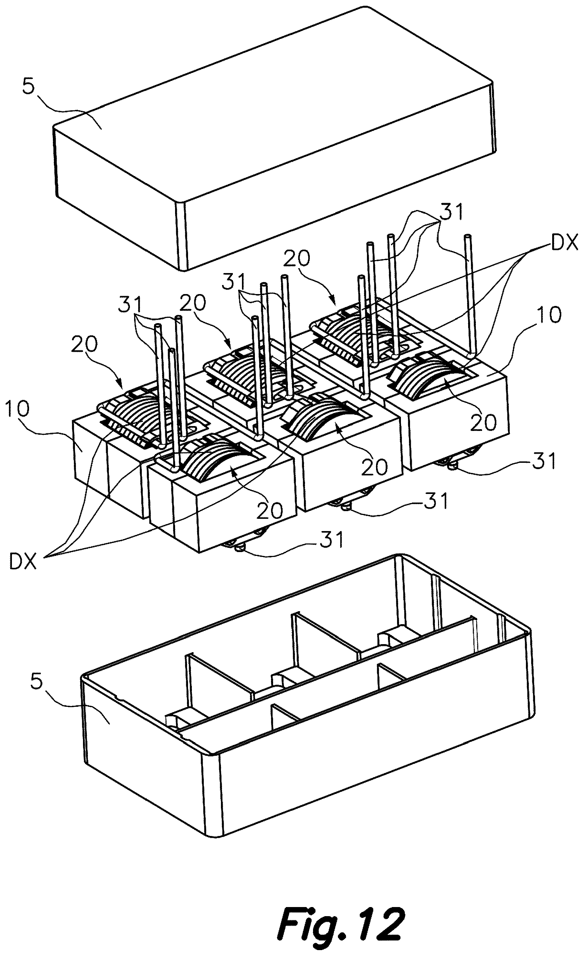

The foregoing and other advantages and features will be more fully understood from the following detailed description of several embodiments with reference to the accompanying drawings, to be taken in an illustrative and not limitative, in which:
Fig. 1 is a perspective of a liquid cooled bobbin according to the invention which is of a single piece. The figure shows the first outer surface on which a winding is to be wound and some lateral extensions of the bobbin as well as two ports for the liquid inlet and outlet of the chamber.
Fig. 2 is a cross section of the bobbin of Fig. 1 showing the chamber comprising in this case several partition walls connecting two parallel concentric walls.
Fig. 3 is a transparent view corresponding to the bobbin of Figs. 1 and 2, showing the partition walls that define a serpentine-shaped cooling channel in the chamber inside the body of the bobbin.
Fig. 4 is a schematic view of a flat development of the chamber within the bobbin body, illustrated in Figs. 2 and 3 allowing seeing that it is constituted in the form of a one-piece body wherein the electro-insulating bobbin is made by many thin parallel overlapped layers of additive material produced by a 3D printing process.
Fig. 5 shows an alternative embodiment in which a bobbin with an annular cavity for receiving an annular magnetic core and two concentric walls defining several passages of a chamber is shown. A lid for closing the several passages of the chamber is also illustrated.
Fig. 6 is a transparent view corresponding to the bobbin of Fig. 5.
   The bobbin of Figs. 5 and 6 can be made by many thin parallel overlapped layers of additive material produced by a 3D printing process.
Fig. 7 is a schematic view of a flat development of the chamber within the bobbin body, illustrated in Figs. 5 and 6.
Fig. 8 shows another schematic view of a flat development of the chamber within the bobbin body as per Figs. 5 and 6, according to this invention. However, in this embodiment the central part of the bobbin body can be made by thermoplastic injection molding as well as the two lids closing the chamber by its upper and lower parts. The central part can also be made by a 3D printing process.
Fig. 9 shows another embodiment of the bobbin according to the invention. The two half-pieces of this embodiment are connected by their mouths and show a series of cavities separated by a series of partition walls. The two half pieces can be made by thermoplastic injection molding or in the alternative made by many thin parallel overlapped layers of additive material produced by a 3D printing process.
Fig. 10 a schematic view of a flat development of the chamber within the bobbin body, illustrated in Fig. 9.
Fig. 11 illustrates a liquid cooled wire wound magnetic device in an exploded view showing a bobbin according to this invention associated to a coil and to a magnetic core.
Finally, Fig. 12 shows a set of several liquid cooled wire wound magnetic devices arranged inside a casing, each magnetic device integrating a bobbin as per the invention, and the several magnetic devices being interconnected by means of a sealed cooling circuit connecting the connection ports (inlets and outlets) of each of the chambers of the corresponding devices so that a sealed cooling circuit of the set of devices is provided.

### Detailed Description of Preferred Embodiments

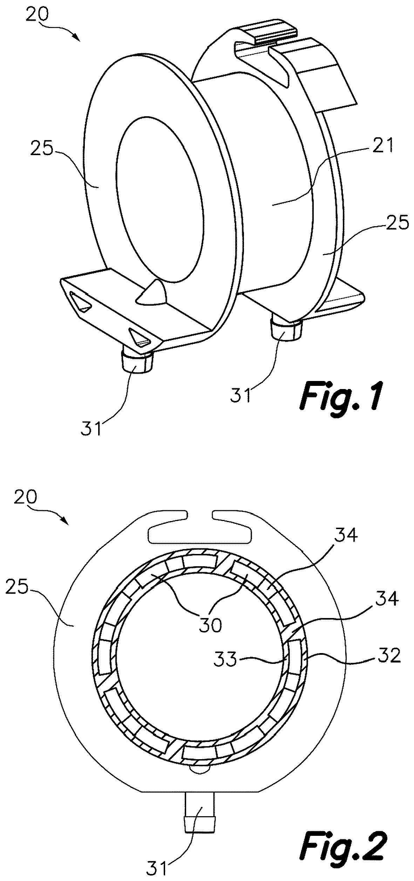

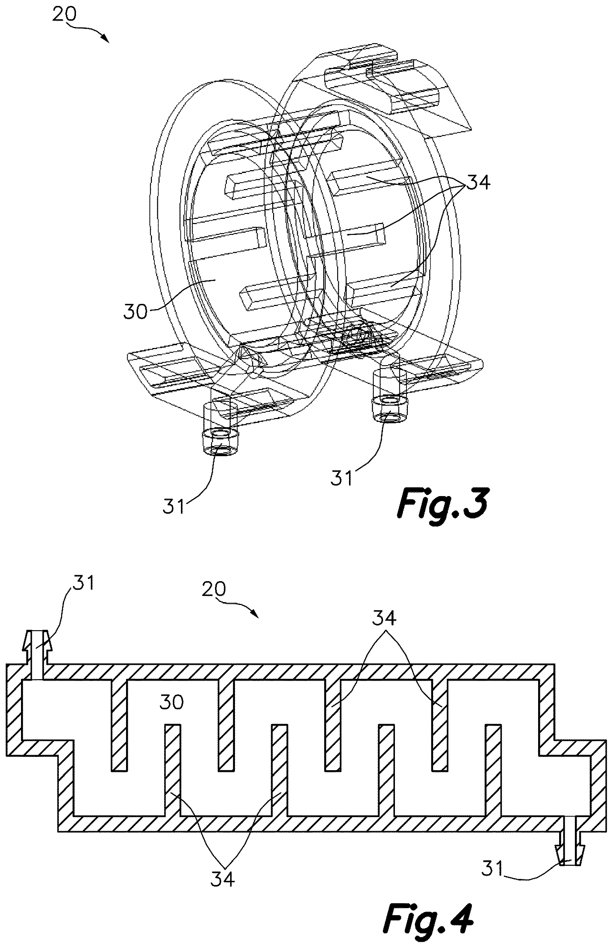

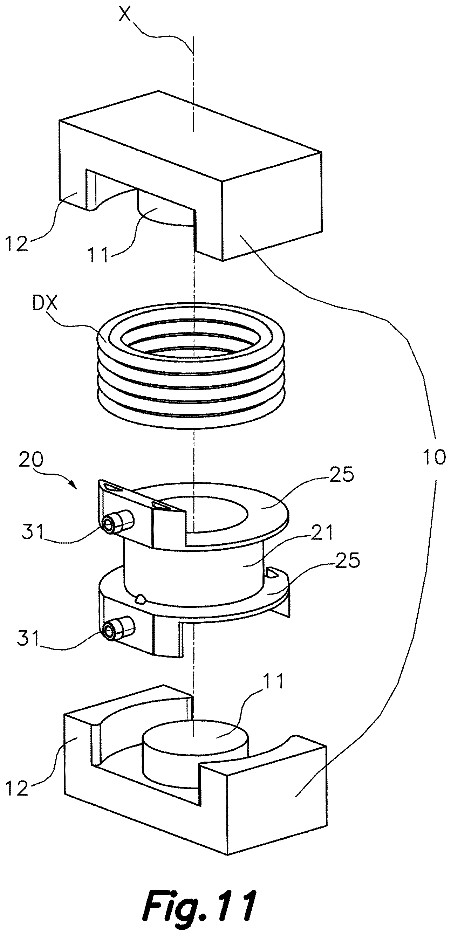

With reference to Figs. 1 to 4, a liquid cooled bobbin for a wire wound magnetic device comprises:
an electro-insulating bobbin 20 with protruding edge regions 25 and a first outer surface 21 therearound intended for supporting at least one first conductor wire winding DX and wound around a first axis X (see Fig. 11) defined by the electro-insulating bobbin 20 and wherein said first outer surface 21 has a closed contour; and
a chamber 30 within the electro-insulating bobbin 20 , the chamber being integrable to a sealed cooling circuit through connection ports 31 allowing a path of a cooling fluid through the chamber 30 of the bobbin 20.

The chamber 20 in this embodiment is defined between outer 32 and inner 33 walls and partition walls 34.

The electro-insulating bobbin 20 is made of a thermoplastic material preferably a thermal-conductive polymeric material.

According to the invention at least a first portion of the chamber 30 is comprised between two parallel walls 32, 33 of the electro-insulating bobbin 20, one of said walls 32, 33 providing the first outer surface 21, and the chamber 30 extends at least around most of said closed contour of the first outer surface 21.

In the particular embodiment of Figs 1 to 4, the electro-insulating bobbin 20 is made of a monolithic single piece with the chamber 30 embedded therein. Here the electro-insulating bobbin 20 is made by many thin parallel overlapped layers of additive material that can be produced by a 3D printing process.

The embodiment of Figs. 5 and 6 comprises a bobbin assembly 20 with a main body also made by many thin parallel overlapped layers of additive material than can be produced by a 3D printing process defining a partial piece 20A providing a cavity bounded by a chamber 30 between an outer wall 32 and an inner wall 31 and connecting ports 31that define an input and an output to the chamber 30. In this embodiment the chamber 30 is sealed by a lid 20B welded by ultrasonic welding for plastics to the partial piece 20A, closing the chamber 30.

Fig. 5 also shows the magnetic core 10, in this case a ring-shaped one, which is also inserted into the central cavity surrounded by the chamber 30.

Fig. 6 shows the specific chamber structure of Fig. 5 embodiment, wherein the chamber 30 includes several partition walls 34, connecting the two parallel walls 32, 33 and defining a serpentine-shaped chamber 30. That is, in this example, within the walls 32, 33 of the bobbin 20, there is a maximum run pipe coil that maximises the time the liquid is in contact with the bobbin to optimise heat transfer.

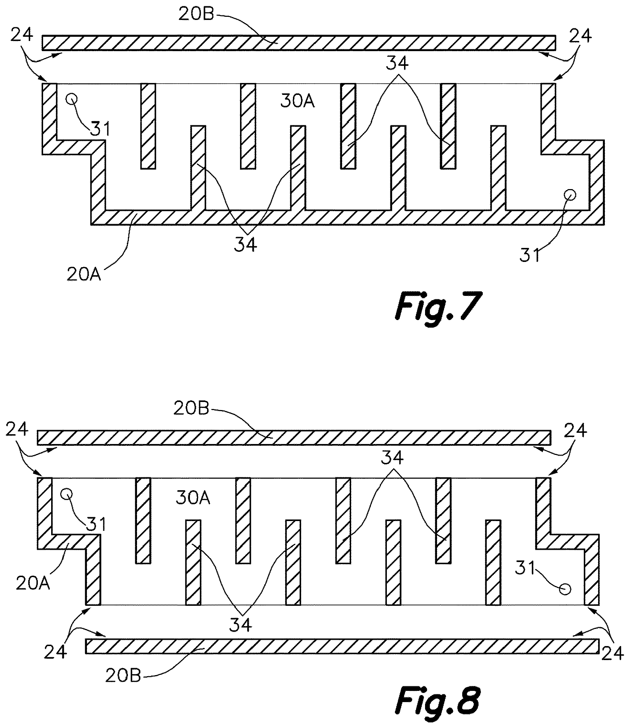

As indicated above, Fig. 7 shows an example to produce the embodiment of Fig. 5, where it is necessary that one of the parts constituting the bobbin is made by many thin parallel overlapped layers of additive material that can be produced by a 3D printing process.

Fig. 8 shows another embodiment of the bobbin of Fig. 5 which can be constructed by a thermoplastic injection moulding process of the component parts.

In the various embodiments illustrated the electro-insulating bobbin 20 further includes protruding edge regions 25 placed on opposed sides of each outer surface 21, including the connection ports 31.

Figs. 9 and Fig. 10 illustrates an example of a bobbin obtained by the coupling of two semi-parts 20A and 20B that are joined by means of the chamber defined between walls 32, 33 mouthpieces. The cited semi-parts 20A, 20B can be made by a thermoplastic injection moulding process of the component parts or in the alternative by a 3D printing process. The two pieces are welded by ultrasonic welding for plastics.

Fig. 11 shows an embodiment using the bobbin 20 of this invention implementing a liquid cooled wire wound magnetic device, constructed around a magnetic core 10 with central 11 and peripheral 12 portions.

As previously indicated Fig. 12 illustrates a set of liquid cooled wire wound magnetic devices arranged inside a casing 5 that has several compartments each of them comprising a bobbin 20. The different bobbins are interconnected by means of a sealed cooling circuit connecting the connection ports 31 (inlets and outlets) of each of the chambers 30 of the bobbins 20 of the corresponding devices.

In this way, a sealed cooling circuit of the set of devices is provided.

The proposed bobbin can be implemented with windings on more than one axis. Thus, the liquid cooled bobbin (20) may further include a second outer surface therearound for supporting at least one second conductor wire winding (DY) wound around a second axis (Y) defined by the electro-insulating bobbin (20), the second axis (Y) being perpendicular to the first axis (X), and wherein the cooling channel further comprises a second portion surrounded by the second outer surface.

According to another embodiment, the cooled bobbin (20) further comprises a third outer surface therearound for supporting at least one third conductor wire winding (DZ) wound around a third axis (Z) defined by the electro-insulating bobbin (20), the third axis (Z) being perpendicular to the first and second axes (X, Y), and wherein the cooling channel further comprises a third portion surrounded by the third outer surface.

## Claims

1. Liquid cooled bobbin for a wire wound magnetic device, comprising:
an electro-insulating bobbin (20) with a first outer surface (21) therearound for supporting at least one first conductor wire winding (DX) wound around a first axis (X) defined by the electro-insulating bobbin (20) and wherein said first outer surface (21) has a closed contour; and
a chamber (30) within the electro-insulating bobbin (20), the chamber being integrable to a sealed cooling circuit through connection ports (31) allowing a path of a cooling fluid through the chamber (30),
wherein at least a first portion of the chamber (30) is comprised between two parallel walls (32, 33) of the electro-insulating bobbin (20), one of said walls (32, 33) providing the first outer surface (21), and the chamber (30) extends at least around most of said closed contour of the first outer surface (21).

2. The liquid cooled bobbin according to claim 1, wherein the electro-insulating bobbin (20) is made of a monolithic single piece with the chamber (30) embedded therein.

3. The liquid cooled bobbin according to claim 1, wherein the electro-insulating bobbin (20) is made of several partial pieces (20A, 20B) bonded together through bonding surfaces (24), the chamber (30) being defined by an open chamber (30A) completely contained within one of the partial pieces (20A, 20B) and by at least one closure of the open chamber (30A) provided by other of said several partial pieces (20A, 20B).

4. The liquid cooled bobbin according to claim 1, wherein the electro-insulating bobbin (20) is made of several partial pieces (20A, 20B) bonded together through bonding surfaces (24), the chamber (30) being defined by several open chambers (30A, 30B), each completely contained within one of the partial pieces (20A, 20B), said several open chambers (30A, 30B) being connected together through connections surrounded by edges of the bonding surfaces (24).

5. The liquid cooled bobbin according to any of the previous claims, wherein the electro-insulating bobbin (20) is made by many thin parallel overlapped layers of additive material produced by a 3D printing process.

6. The liquid cooled bobbin according to claim 3 or 4, wherein at least one of the partial pieces (20A, 20B) of the electro-insulating bobbin (20) is made by many thin parallel overlapped layers of additive material produced by a 3D printing process.

7. The liquid cooled bobbin of any of the previous claims, wherein the chamber (30) includes several partition walls (34), connecting the two parallel walls (32, 33), defining a serpentine-shaped chamber (30).

8. The liquid cooled bobbin of claim 7, wherein the electro-insulating bobbin (20) is made of parallel overlapped layers of additive material transversal to successively interconnected straight segments of the serpentine-shaped channel.

9. The liquid cooled bobbin according to any of the previous claims, wherein one of said two parallels walls is an inner wall (33) which provides a first closed inner surface surrounding a hollow interior of the electro-insulating bobbin (20) adapted for containing at least a portion of a magnetic core (10).

10. The liquid cooled bobbin according to any of the previous claims, wherein the electro-insulating bobbin (20) further includes protruding edge regions (25) placed on opposed sides of each outer surface (21), including the connection ports (31).

11. The liquid cooled bobbin according to any of the previous claims, wherein the electro-insulating bobbin (20) is made of a thermoplastic material preferably a thermal-conductive polymeric material.

12. A liquid cooled wire wound magnetic device including:
a magnetic core (10);
an electro-insulating bobbin (20) with a first outer surface therearound supporting at least one first conductor wire winding (DX) wound around a first axis (X) defined by the electro-insulating bobbin (20) and wherein said first outer surface is a closed outer surface; and
a chamber within the electro-insulating bobbin (20), the chamber being integrated in a sealed cooling circuit through connection ports allowing a path of a cooling fluid through the chamber,
wherein at least a first portion of the chamber is comprised between two parallel walls of the electro-insulating bobbin (20), one of them providing said first outer surface, and extends at least around most of said closed contour of the first outer surface.

13. The liquid cooled wire wound magnetic device of claim 12, wherein the magnetic core (10) includes a central portion (11), surrounded by the electro-insulating bobbin (20), and at least one peripheric portion (12) connecting opposed ends of the central portion (11) encircling the electro-insulating bobbin (20), defining a closed magnetic loop around the at least one first conductor wire winding (DX).

14. The liquid cooled wire wound magnetic device according to claim 12 or 13, wherein the magnetic core (10), the electro-insulating bobbin (20) and the at least one first wire winding (DX) are embedded in an electro-insulant and thermal-conductive potting composition.

15. Liquid cooled wire wound magnetic device, comprising:
a magnetic core (10);
an electro-insulating bobbin (20) with a first outer surface therearound supporting at least one first conductor wire winding (DX) wound around a first axis (X) defined by the electro-insulating bobbin (20) and wherein said first outer surface is a closed outer surface; and
a chamber within the electro-insulating bobbin (20), the chamber being integrated in a sealed cooling circuit through connection ports allowing a path of a cooling fluid through the chamber,
wherein at least a first portion of the chamber is comprised between a wall of the electro-insulating bobbin (20) and a surface of the magnetic core (10), the wall providing said first outer surface, and the chamber extends at least around most of said closed contour of the first outer surface.

16. The liquid cooled wire wound magnetic device according to claims 12 to 15, wherein the electro-insulating bobbin (20) is made by many thin parallel overlapped layers of additive material produced by a 3D printing process.

17. A set of liquid cooled wire wound magnetic devices according to any of claims 10 to 16 that are interconnected by means of a sealed cooling circuit in a casing (5) connecting the connection inlets and outlets of each of the chambers of the corresponding devices, so that a sealed cooling circuit of the set of devices is provided.
